(19) Europäisches Patentamt
European Patent Office
Office européen des brevets

(11) **EP 2 092 366 B1**

(12) **FASCICULE DE BREVET EUROPEEN**

(45) Date de publication et mention
de la délivrance du brevet:
**27.06.2012 Bulletin 2012/26**

(21) Numéro de dépôt: **07847610.8**

(22) Date de dépôt: **30.11.2007**

(51) Int Cl.:
***G01S 13/72*** *(2006.01)*     ***G01S 13/66*** *(2006.01)*

(86) Numéro de dépôt international:
**PCT/EP2007/063094**

(87) Numéro de publication internationale:
**WO 2008/065194 (05.06.2008 Gazette 2008/23)**

(54) **PROCEDE D'ESTIMATION DU SITE D'UN PROJECTILE BALISTIQUE**

VERFAHREN ZUR SCHÄTZUNG DER HÖHE EINES BALLISTISCHEN PROJEKTILS

METHOD OF ESTIMATING THE ELEVATION OF A BALLISTIC PROJECTILE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.12.2006 FR 0610530**

(43) Date de publication de la demande:
**26.08.2009 Bulletin 2009/35**

(73) Titulaire: **Thales**
**92200 Neuilly Sur Seine (FR)**

(72) Inventeurs:
- **DURAND, Bernard**
  **92140 Clamart (FR)**
- **CAVALLERI, Christian**
  **78180 Montigny Le Bretonneux (FR)**
- **ADRIAN, Odile**
  **92140 Clamart (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 5 140 329**     **US-A- 5 631 654**
**US-A1- 2006 044 183**     **US-A1- 2006 092 075**

- **BROUSSEAU C ET AL: "A V.H.F. MULTIFREQUENCY AND MULTIPOLARIZATION RADAR: PRELIMINARY RESULTS" PROCEEDINGS OF THE 1996 IEEE NATIONAL RADAR CONFERENCE. ANN ARBOR, MAY 13 - 16, 1996, PROCEEDINGS OF THE 1996 NATIONAL RADAR CONFERENCE, NEW YORK, IEEE, US, 13 mai 1996 (1996-05-13), pages 226-231, XP000634946 ISBN: 0-7803-3147-8**
- **ZHANG MUSHE: "Engineering problems of low-angle tracking radars" RADAR, 2001 CIE INTERNATIONAL CONFERENCE ON, PROCEEDINGS OCT 15-18, 2001, PISCATAWAY, NJ, USA,IEEE, 15 octobre 2001 (2001-10-15), pages 52-54, XP010577770 ISBN: 0-7803-7000-7**
- **FARINA A ET AL: "Classification and Launch-Impact Point Prediction of Ballistic Target via Multiple Model Maximum Likelihood Estimator (MM-MLE)" RADAR, 2006 IEEE CONFERENCE ON APRIL 2006, PISCATAWAY, NJ, USA,IEEE, avril 2006 (2006-04), pages 802-806, XP010918407 ISBN: 0-7803-9496-8**

EP 2 092 366 B1

**Description**

**DOMAINE DE L'INVENTION**

La présente invention concerne le domaine général de la protection de zones contre le tir de projectiles balistiques. Elle concerne en particulier la détermination de la trajectoire d'un obus de mortier se dirigeant vers une zone protégée. Plus particulièrement encore elle concerne la mise en oeuvre d'un procédé permettant de déterminer de manière précise l'élévation d'un tel projectile, détecté et pisté par un radar de veille Doppler classique

**CONTEXTE DE L'INVENTION - ART ANTERIEUR**

Lorsque l'on souhaite protéger une zone donnée contre des tirs de munitions d'artillerie et en particulier contre le tir d'obus de mortier il est connu de mettre en place une surveillance radar. Un type de surveillance classique consiste notamment à mettre en oeuvre un ou plusieurs radars de veille de courte portée, d'une portée d'une dizaine de km par exemple. On utilise généralement de manière préférentielle des radars fonctionnant en bande UHF, bande de fréquences qui, par rapport aux bandes de fréquences plus élevées, bande L ou bande S par exemple, présente l'avantage d'accroître la surface équivalente radar ou "SER" des objets éclairés par l'onde radar émise et donc la probabilité de détection de ces objets.

Par ailleurs, pour effectuer une protection efficace de la zone considérée et en particulier des individus et des biens se trouvant dans la zone, il est important que sitôt qu'un projectile pénétrant dans la zone est détecté, on puisse en connaître la trajectoire et, en particulier, l'origine et le point d'impact. Généralement, on reconstitue la trajectoire du projectile à l'aide des mesures de position effectuées successivement au cours du temps par le radar (distance radiale et position angulaire en gisement et en site). Pour obtenir une reconstitution efficace de cette trajectoire il est bien évidemment nécessaire de disposer de mesures ayant une précision suffisante. Les points de départ et d'impact du projectile sont par suite déterminés avec une précision décrite par des ellipses d'incertitude dont la taille est directement fonction de la précision des mesures réalisées.

S'agissant de radar de surveillance basse altitude, catégorie dont font généralement partie les radars mis en oeuvre pour effectuer une telle surveillance, un problème particulier se pose, problème lié aux réflexions de l'onde radar sur le sol ou sur des obstacles placés au sol, des bâtiments en particulier. Ces réflexions parasites créent des interférences avec l'onde radar, interférences dont il est connu qu'elles ont pour effet d'altérer la précision de mesures réalisées, en particulier la précision des mesures d'élévation (ou site), réalisée par le radar. Ces altérations sont d'autant plus importantes que la position mesurée se situe à une altitude plus basse. En particulier elles rendent imprécises voire inutilisables les mesures réalisées sur le projectile aux instants proches de l'instant de sortie du mortier ou plus généralement du lanceur.

Ces altérations sont, par ailleurs, d'autant plus importantes que la bande de fréquences exploitée par le radar est plus basse. C'est pourquoi dans un environnement favorisant les réflexions multiples, du fait par exemple que le sol présente peu de relief et constitue une surface réfléchissant fortement les ondes radar ou encore du fait de la présence d'obstacles importants, on est souvent conduit à utiliser des radars fonctionnant dans des bandes de fréquences plus élevées, des bandes hyperfréquences telles que la bande L par exemple, moins sensibles au phénomène. Ce faisant, on perd le bénéfice d'une plus grande SER et la probabilité de détection pour une puissance d'émission comparable se trouve réduite.

**PRESENTATION DE L'INVENTION**

Un but de l'invention est de résoudre ce problème de précision de mesure et de proposer une solution permettant d'utiliser un radar de surveillance Doppler classique, fonctionnant en bande UHF, pour réaliser des mesures de position d'un projectile balistique se déplaçant à basse altitude avec une précision permettant de reconstituer la trajectoire de ce projectile à partir des mesures effectuées.

A cet effet l'invention a pour objet un procédé pour déterminer l'angle d'élévation d'un projectile suivant une trajectoire balistique, caractérisé en ce qu'il comporte les étapes suivantes:

- une première étape d'estimation, à l'instant considéré, des valeurs des grandeurs d et d représentant respectivement la dérivée et la dérivée seconde par rapport au temps de la vitesse Doppler d de la cible

- une seconde étape d'estimation de la composante radiale de l'accélération $\Gamma_p$ du projectile, cette composante radiale étant définie par la relation d'approximation suivante:

$$\ddot{d} \approx -2 \cdot \frac{d\Gamma_\rho}{dt}$$

- une troisième étape d'estimation de la valeur à l'instant considéré de la vitesse V du projectile, la vitesse estimée étant définie par la relation suivante:

$$\hat{V} = \left( d^2 - \dot{d} \cdot R - \hat{\Gamma}_\rho \cdot R \right)^{1/2}$$

- une quatrième étape d'estimation de la valeur à l'instant considéré de l'estimation E de l'élévation du projectile, cette élévation étant estimée, par intégration en fonction du temps, à partir de la relation suivante:

$$\frac{d\hat{E}}{dt} = \frac{1}{R} \cdot \left( \hat{V}^2 - d^2 \right)^{1/2}$$

Selon une variante de mise en oeuvre, le procédé selon l'invention comporte en outre, entre la troisième et la quatrième étape, une étape intermédiaire d'estimation de la valeur de l'angle d'attitude présenté par le projectile à l'instant considéré, l'angle d'attitude étant défini par la relation suivante:

$$d = V \cdot \cos\psi$$

l'estimation de l'angle d'attitude $\psi$ présenté par le projectile permettant de tracer la valeur de la surface équivalente présentée par le projectile.

Selon une autre variante de mise en oeuvre, le procédé selon l'invention comporte en outre une étape complémentaire de calcul de la précision $\sigma_V^2$ de l'estimation de la vitesse du projectile et de la précision $\sigma_E^2$ de l'estimation de l'angle d'élévation, $\sigma_V^2$ et $\sigma_E^2$ étant respectivement définies par les relations suivantes:

$$\sigma_V^2 \approx \frac{1}{4 \cdot \hat{V}^2} \cdot \left[ 4 \cdot d^2 \cdot \sigma_d^2 + K \cdot \frac{R^2 \cdot \sigma_d^2}{\Delta t^2} + \sigma_R^2 \cdot \left( \dot{d}^2 + \hat{\Gamma}_\rho^2 \right) \right],$$

$$\sigma_E^2 = \frac{\Delta t^2}{2 \cdot R^2 \cdot \left( \hat{V}^2 - d^2 \right)} \cdot \left[ \left( \frac{\hat{V}^2 - d^2}{R} \right)^2 \cdot \sigma_R^2 + \hat{V}^2 \cdot \sigma_V^2 + \dot{d}^2 \cdot \sigma_d^2 \right]$$

dans lesquelles les grandeurs suivantes représentent respectivement:

- d, la vitesse Doppler du projectile,
- $\sigma_d$, la précision sur d,
- R, la distance radiale mesurée,
- $\sigma_R$, la précision sur R,

- Δt, la période de rafraîchissement des mesures.

## DESCRIPTION DES FIGURES

Les caractéristiques et avantages de l'invention seront mieux appréciés grâce à la description qui suit, description qui s'appuie sur les figures annexées, figures qui présentent:

- la figure 1, l'allure du diagramme de couverture d'un radar de veille UHF,
- la figure 2, une illustration schématique de la trajectoire balistique suivie par les projectiles auxquels s'applique plus particulièrement l'invention,
- la figure 3, un organigramme de principe du procédé selon l'invention,
- les figures 4 et 5, des courbes mettant en évidence la conformité au modèle de trajectoire balistique des estimations de l'angle d'élévation réalisées par le procédé selon l'invention.

## DESCRIPTION DETAILLEE

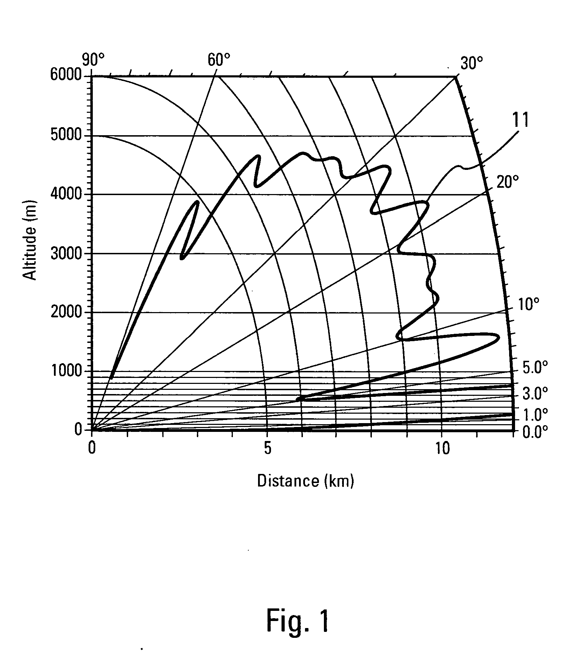

On considère en premier lieu la figure 1 qui présente un exemple de diagramme de couverture d'un radar de veille UHF (Ultra Haute Fréquence) du type pouvant être utilisé pour effectuer la surveillance de l'espace aérien englobant une zone à protéger et pour effectuer la détection et le suivi de la trajectoire d'obus de mortier. Ce diagramme matérialisé par la courbe 11 traduit l'évolution de la portée du radar considéré en fonction de l'angle d'élévation ou de site. Comme on peut le constater sur la figure, et comme cela a été dit précédemment, le diagramme de couverture en élévation (site) traduit des variations importantes de la portée du radar en fonction de l'élévation, notamment en ce qui concerne les sites bas, typiquement entre 0 et 20˚.
Ainsi dans l'exemple de la figure on constate que le radar présente une portée maximale pour les sites très bas, avec maximum pour des sites, des élévations, s'étendant de 1,5˚ à 4˚ ou encore pour des élévations dont la valeur est située autour de 8˚, et une portée plus faible pour les sites compris entre 4˚ et 8˚, ainsi que pour les sites compris entre 10 et 20˚. Cette dispersion de portée en fonction de l'élévation, qui affecte les radars fonctionnant en UHF, et qui est due notamment à l'influence forte des réflexions multiples du signal et en particulier des réflexions sur le sol, se traduit par des pertes de détection voire par une détection tardive de projectiles présentant un angle de site particulier correspondant à une zone de portée radar faible. Ainsi, pour un radar ayant un diagramme de couverture tel que celui de la figure 1, un projectile se rapprochant du radar avec un angle d'élévation de l'ordre de 4˚ ne sera détecté qu'à partir d'une distance relativement faible, de l'ordre de 7 km, alors que le même projectile se rapprochant avec un angle d'élévation de 8˚ sera quant à lui détecté plus précocement à une distance supérieure à 10 km De plus dans la mesure où un projectile suit généralement une trajectoire le conduisant à se rapprocher de son objectif avec un angle variable il est possible qu'un projectile initialement détecté ne fasse plus l'objet de détections pendant un laps de temps donné et que par suite la menace qu'il représente ne soit plus prise en compte.

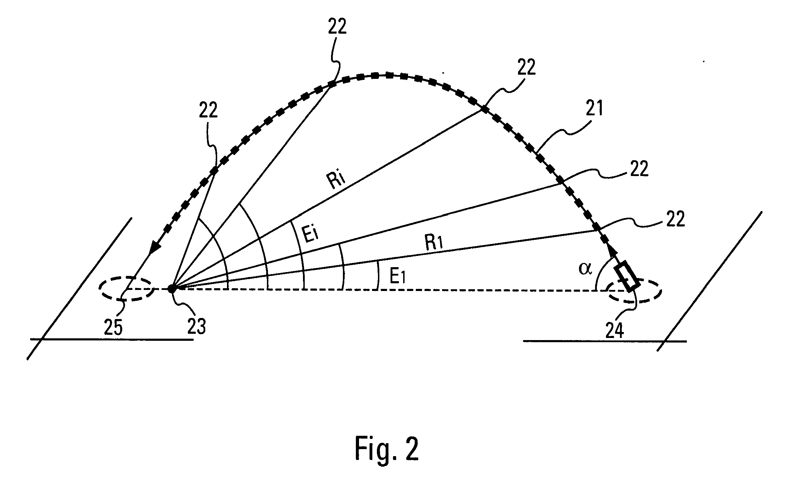

La figure 2 représente une trajectoire balistique type 21, telle que peut par exemple en suivre un obus de mortier. Cet obus est tiré dans la direction de la cible à atteindre, située par exemple dans la zone surveillée par le radar, avec un angle de tir $\alpha$ important, typiquement de l'ordre de 50˚ à 75˚. Par suite il suit une trajectoire balistique déterminée principalement par ses propres caractéristiques physiques, par son accélération initiale, et par l'angle de tir.
Le type de trajectoire suivie par le projectile étant connu, il est possible de reconstituer la trajectoire du projectile et même de déterminer avec une précision donnée son point de départ 24 et le point d'impact probable 25, pour peu que l'on puisse connaître sa position 22 en différents instants. Dans la pratique, la trajectoire d'un projectile pénétrant dans une zone protégée par un radar de surveillance peut être généralement reconstituée à partir des informations de position du projectile par rapport au radar, informations réactualisées périodiquement par le radar. Généralement, les informations utilisées sont la distance radiale $R_i$ séparant le projectile du radar à un instant de mesure i, l'azimut $A_i$ (non représenté sur la figure) et l'angle d'élévation $E_i$ suivant lesquels le projectile est détecté. Par suite le radar étant situé en un point 23 connu, il est possible de déterminer si la trajectoire du projectile présente un quelconque danger pour la zone protégée. De manière classique l'azimut et l'angle d'élévation sont mesurés par des procédés connus d'écartométrie angulaire qui font intervenir pour chaque type d'angle, azimut et élévation, la formation d'une voie dite "voie somme" et d'une voie dite "voie différence". Cependant pour obtenir des mesures précises et par suite une détermination précise de la position du projectile à l'instant considéré, il est important que les signaux reçus soient peu perturbés. Or, l'expérience et la pratique montrent que cette condition se trouve parfois mal remplie, en particulier lorsque, pour effectuer la surveillance, on met en oeuvre un radar fonctionnant dans la bande de fréquence UHF. En effet le fonctionnement en bande UHF rend le radar plus sensible, en particulier, aux perturbations dues aux réflexions multiples du signal, perturbations qui altèrent plus spécifiquement la mesure de l'angle d'élévation. De sorte qu'une mesure d'écartométrie angulaire classique s'avère peu satisfaisante pour connaître précisément l'angle d'élévation du projectile et par suite sa position. C'est pourquoi, pour déterminer l'angle d'élévation le procédé selon l'invention met en oeuvre une méthode alternative au calcul classique d'écartométrie.

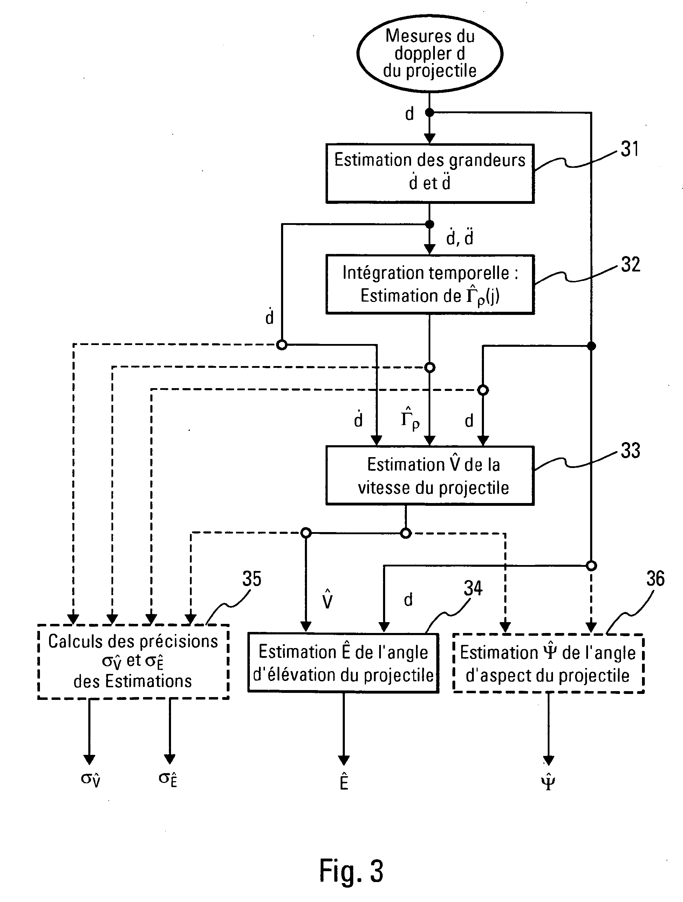

La figure 3 décrit de manière synoptique les différentes étapes mises en oeuvre par le procédé selon l'invention pour déterminer l'angle d'élévation du projectile à un instant donné.

Comme l'illustre la figure 3, le procédé selon l'invention s'applique à l'information de vitesse d obtenue à partir des échantillons de signal s(j) correspondant aux mesures périodiques du signal s(t) réalisées par le radar dans la direction considérée. Ainsi, si T représente la période de rafraîchissement des mesures on peut écrire $S_j = S(j) = S(t_0+jT)$ où $t_0$ représente une origine des temps arbitraire. L'information vitesse d est ici obtenue de manière classique, par exemple par analyse spectrale du signal par FFT sur N points et interpolation des filtres Doppler ayant donné une réponse significative. Comme il a été dit précédemment, le procédé selon l'invention comporte plusieurs étapes qui permettent, en partant de ces données d'entrée, d'obtenir une estimation précise de l'angle d'élévation. Ces différentes étapes sont décrites dans la suite de la description.

La première étape 31 consiste à estimer, à partir des valeurs de d obtenues, les valeurs des fonctions d et d définies par:

$$\dot{d} = \frac{d(d)}{dt} \, ,$$

$$\ddot{d} = \frac{d^2(d)}{dt^2}$$

Selon l'invention, les grandeurs d et d peuvent être estimées par tout procédé connu à partir des mesures successives de d, en particulier au moyen d'estimateurs prédictifs basés sur des développements de Taylor ou encore au moyen d'estimateurs dont la structure est basée sur une combinaison linéaire de polynômes de Legendre. Ces méthodes non développées ici, permettent ainsi, par exemple, d'exprimer le vecteur des valeurs $(d_j, d_j, d_j)$ par la relation suivante:

$$\begin{bmatrix} d_j \\ \dot{d}_j \\ \ddot{d}_j \end{bmatrix} = M \cdot \begin{bmatrix} d_j \\ d_{j-1} \\ d_{j-2} \\ d_{j-3} \end{bmatrix} \qquad [1],$$

avec:

$$M = \begin{bmatrix} 1 & 0 & 0 & 0 \\ 11/6 & 3 & -3/2 & 1/3 \\ 1 & -5/2 & 2 & -1/2 \end{bmatrix} \qquad [2]$$

La deuxième étape consiste ensuite à estimer la valeur $\Gamma_\rho(j)$ de la composante radiale de l'accélération du projectile.

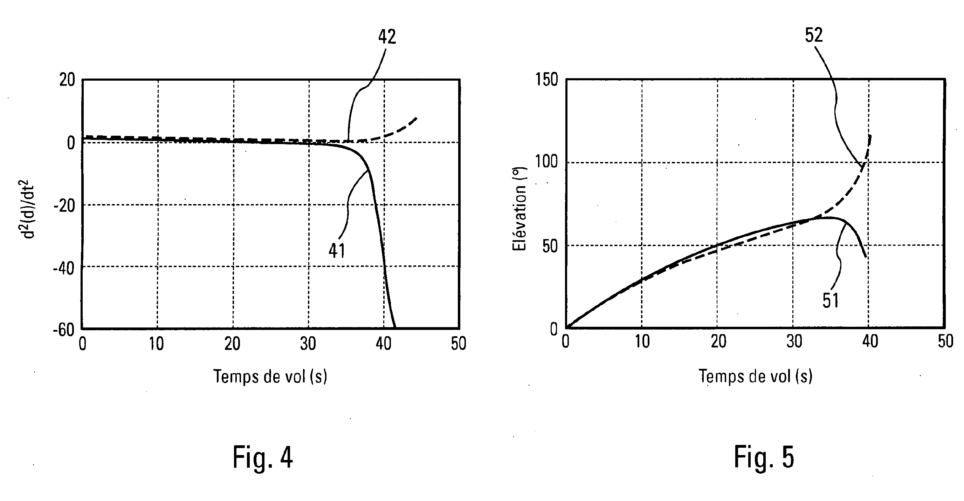

Des études menées par la déposante ont montré, comme l'illustre la figure 4, que sur des intervalles de temps bornés l'accélération $\Gamma_\rho(j)$ du projectile est liée à la grandeur d par la relation suivante:

$$\ddot{d} \approx -2 \cdot \frac{d\Gamma_\rho}{dt} \qquad [3]$$

De la sorte, $\Gamma_\rho$ peut avantageusement être estimé à partir de la relation suivante:

$$\Gamma_\rho(t) \approx -\frac{1}{2} \cdot \int \ddot{d} \cdot dt + \Gamma_{\rho 0} \qquad [4]$$

Ce résultat avantageux est mis à profit au cours de l'étape 32 pour effectuer l'estimation de la valeur $F_\rho(j)$ de l'accélération pour un échantillon j, cette estimation étant alors définie par la relation de récurrence suivante:

$$\hat{\Gamma}_\rho(j) = \hat{\Gamma}_\rho(j-1) - \frac{\ddot{d}(j) \cdot \Delta t}{2} \quad \text{pour } j \geq 2$$

et $\qquad [5]$

$$\hat{\Gamma}_\rho(1) = \Gamma_{\rho 0}$$

dans laquelle $\Delta t$ représente la période d'échantillonnage et $\Gamma_{\rho 0}$ la valeur initiale de la composante radiale de l'accélération du projectile.

S'agissant d'un obus de mortier cette composante radiale est notamment fonction de l'angle de tir (i.e. de la hausse), de la vitesse initiale, de la masse et du coefficient balistique du projectile.

La similitude des courbes 41 et 42 qui représentent respectivement un modèle d'évolution au cours du temps de la dérivée de la composante radiale de l'accélération du projectile et la courbe correspondante obtenue à partir des estimations successives de cette fonction obtenues au moyen du procédé selon l'invention illustre pour le cas d'un obus de mortier le bien fondé de cette approximation.

La troisième étape 33 consiste ensuite à estimer la vitesse propre du projectile ou plus exactement l'intensité du vecteur vitesse. Selon l'invention l'estimation $\hat{V}(j)$ de la vitesse du projectile à un instant de mesure donné, est réalisée à partir des valeurs correspondantes de d(j), de $\dot{d}$ (j) et de $\hat{\Gamma}\rho(j)$ Par suite la vitesse du projectile est estimée en utilisant la relation suivante:

$$\hat{V}(j) = \left( d^2(j) - \dot{d}(j) \cdot R(j) - \hat{\Gamma}_\rho(j) \cdot R(j) \right)^{1/2} \qquad [6]$$

La quatrième étape 34 consiste enfin à réaliser l'estimation de la valeur de l'angle d'élévation à un instant de mesure donné t (t= $t_0$+jT), en fonction de l'estimation $\hat{V}(j)$ de la vitesse réalisée à l'étape précédente. Par suite, l'angle d'élévation du projectile est estimé à partir de la relation suivante:

$$\frac{d\hat{E}}{dt} = \frac{1}{R} \cdot \left( \hat{V}^2 - d^2 \right)^{1/2} \qquad [7]$$

De sorte que, selon l'invention, l'angle d'élévation du projectile est estimé en utilisant la relation suivante:

$$\hat{E}(j) = \hat{E}(j-1) + \frac{1}{R(j)}\left(\hat{V}^2(j) - d^2(j)\right)^{1/2} \cdot \Delta t \quad \text{pour } j \geq 2$$

et [8]

$$\hat{E}(1) = E_0$$

dans laquelle $\Delta t$ représente la période d'échantillonnage et $E_0$ la valeur initiale de l'élévation du projectile, fixée notamment de façon à prendre en compte l'angle de tir du projectile ainsi que les conditions de relief de la zone couverte. S'agissant d'un obus de mortier, $E_0$ peut être fixée à une valeur de l'ordre de quelques degrés, 2 degrés par exemple.

A l'issu de ces quatre étapes on obtient enfin, pour chaque mesure effectuée par le radar, une estimation de l'angle d'élévation E. Comme l'illustre les courbes 51 et 52 de la figure 5, qui représentent respectivement un modèle d'évolution au cours du temps de l'angle d'élévation d'un obus de mortier et la courbe correspondante obtenue à partir des positions successives du projectile estimées au moyen du procédé selon l'invention, l'estimation réalisée coïncide étroitement sur un intervalle défini, la divergence des courbes n'apparaissant que tardivement alors que la trajectoire probable du projectile est connue. Ainsi, l'estimation réalisée grâce au procédé selon l'invention apparaît donc comme une estimation valable de l'angle d'élévation, et le procédé selon l'invention présente donc avantageusement une alternative valable à une mesure classique de l'angle d'élévation par écartométrie.

Dès lors que l'on dispose d'un ensemble de mesures, espacées périodiquement dans le temps, de la distance radiale R, de l'azimut A et de l'angle d'élévation E, il est possible de reconstituer la trajectoire probable d'un projectile ne disposant pas de moyen propre de guidage ou de propulsion, comme c'est le cas des obus de mortier. De même il est possible de déterminer avec une précision donnée la position du point de départ du projectile, ainsi que la position du point d'impact. Cette précision est évidemment fonction de la précision avec laquelle les différents paramètres sont estimés à chaque mesure. Une méthode telle que celle décrite dans ce qui précède, dans la mesure où elle permet d'améliorer par rapport aux méthodes connues l'estimation de l'angle d'élévation tout en mettant en oeuvre des calculs simples, présente donc un grand avantage.

Selon une variante de mise en oeuvre avantageuse, le procédé selon l'invention peut également comporter une étape 35, parallèle à l'étape 34, qui permet de déterminer la précision de l'estimation de l'angle d'élévation obtenue à l'issue de l'étape 34.

Le traitement effectué au cours de l'étape 35, figurée en traits pointillés sur la figure 3, consiste à calculer l'écart type de l'estimation de l'angle d'élévation à partir des valeurs mesurées ou estimées durant les étapes précédentes, en utilisant successivement les relations suivantes qui définissent la précision sur l'estimation de la vitesse et la précision d'estimation sur l'angle d'élévation:

$$\sigma_V^2 \approx \frac{1}{4 \cdot \hat{V}^2} \cdot \left[ 4 \cdot d^2 \cdot \sigma_d^2 + K \cdot \frac{R^2 \cdot \sigma_d^2}{\Delta t^2} + \sigma_R^2 (\dot{d}^2 + \hat{\Gamma}_\rho^2) \right] \qquad [9]$$

où $\sigma_V$ représente la précision de l'estimation de la vitesse du projectile,

$$\sigma_{\dot{E}}^2 \approx \frac{\Delta t^2}{2 \cdot R^2 \cdot (\hat{V}^2 - d^2)} \cdot \left[ \left( \frac{(\hat{V}^2 - d^2)}{R} \right)^2 \cdot \sigma_d^2 + \hat{V}^2 \cdot \sigma_V^2 + d^2 \cdot \sigma_d^2 \right] \qquad [10]$$

où $\sigma_E$ représente la précision de l'estimation de l'angle d'élévation du projectile, relations dans lesquelles les variables suivantes représentent respectivement:

- $\sigma_d$, la précision de la détermination de la vitesse Doppler d
- $\sigma_R$, la précision de la mesure de distance radiale mesurée

- K, un coefficient qui traduit la sensibilité de la précision pouvant être obtenue sur l'estimation de la vitesse du projectile à l'accélération impulsée à ce projectile. Le coefficient K dépend en particulier de la méthode utilisée pour réaliser les estimations de d et $\ddot{d}$.

Selon une deuxième variante de mise en oeuvre, qui peut par ailleurs être combinée avec la variante précédente, le procédé selon l'invention peut également comporter une étape complémentaire 36 durant laquelle on effectue l'estimation de la valeur ψ(j) de l'angle d'aspect ψ associé au projectile. La connaissance de la valeur de cet angle ψ permet en particulier avantageusement de tracer la valeur de la surface équivalente présentée par le projectile à l'instant considéré.

L'étape 36 représentée par des traits pointillés sur l'illustration de la figure 3, consiste à estimer la valeur de l'angle d'aspect ψ(j) défini par la relation suivante:

$$d(j) = V(j) \cdot \cos \psi(j) \qquad\qquad [11]$$

où V représente le module du vecteur vitesse du projectile à l'instant considéré et d la vitesse Doppler mesurée.

## Revendications

1. Procédé pour déterminer l'angle d'élévation d'un projectile suivant une trajectoire balistique, **caractérisé en ce qu'**il comporte les étapes suivantes:

    - une première étape d'estimation, à l'instant considéré, des valeurs des grandeurs d et d représentant respectivement la dérivée première et la dérivée seconde par rapport au temps de la vitesse Doppler d du projectile
    - une seconde étape d'estimation de la composante radiale de l'accélération $\Gamma_p$ du projectile, cette accélération radiale étant définie par la relation d'approximation suivante:

$$\ddot{d} \approx -2 \cdot \frac{d\Gamma_\rho}{dt}$$

    - une troisième étape d'estimation de la valeur à l'instant considéré de la vitesse V du projectile, la vitesse estimée étant définie par la relation suivante:

$$\hat{V} = \left( d^2 - \dot{d} \cdot R - \hat{\Gamma}_\rho \cdot R \right)^{1/2}$$

    - une quatrième étape d'estimation de la valeur à l'instant considéré de l'estimation E de l'élévation du projectile, cette élévation étant estimée, par intégration en fonction du temps, à partir de la relation suivante:

$$\frac{d\hat{E}}{dt} = \frac{1}{R} \cdot \left( \hat{V}^2 - d^2 \right)^{1/2}$$

2. Procédé selon la revendication 1, **caractérisé en ce qu'**il comporte en outre, entre la troisième et la quatrième étape, une étape intermédiaire d'estimation de la valeur de l'angle d'attitude présenté par le projectile à l'instant considéré, l'angle d'attitude étant défini par la relation suivante:

$$d = V \cdot \cos \psi$$

l'estimation de l'angle d'attitude $\psi$ présenté par le projectile permettant de tracer la valeur de la surface équivalente présentée par le projectile.

3.  Procédé selon la revendication 1 **caractérisé en ce qu'**il comporte en outre une étape complémentaire de calcul de la précision $\sigma_v^2$ de l'estimation de la vitesse du projectile et de la précision $\sigma_E^2$ de l'estimation de l'angle d'élévation, $\sigma_v^2$ et $\sigma_E^2$ étant respectivement définies par les relations suivantes:

$$\sigma_v^2 \approx \frac{1}{4 \cdot \hat{V}^2} \cdot \left[ 4 \cdot d^2 \cdot \sigma_d^2 + K \cdot \frac{R^2 \cdot \sigma_d^2}{\Delta t^2} + \sigma_R^2 \cdot \left( \dot{d}^2 + \hat{\Gamma}_p^2 \right) \right],$$

$$\sigma_E^2 = \frac{\Delta t^2}{2 \cdot R^2 \cdot \left( \hat{V}^2 - d^2 \right)} \cdot \left[ \left( \frac{\hat{V}^2 - d^2}{R} \right)^2 \cdot \sigma_R^2 + \hat{V}^2 \cdot \sigma_v^2 + \dot{d}^2 \cdot \sigma_d^2 \right]$$

dans lesquelles les grandeurs suivantes représentent respectivement:

- d, la vitesse Doppler du projectile,
- $\sigma_d$, la précision sur d,
- R, la distance radiale mesurée,
- $\sigma_R$, la précision sur R,
- $\Delta t$, la période de rafraîchissement des mesures.

**Claims**

1.  A method for determining the angle of elevation of a projectile following a ballistic trajectory, **characterised in that** it comprises the following steps:

    - a first step of estimating, at the considered instant, the values of the quantities and $\ddot{d}$ that respectively represent the first derivation and the second derivation relative to the time of the Doppler speed d of the projectile;
    - a second step of estimating the radial acceleration component $\Gamma_p$ of the projectile, said radial acceleration being defined by the following approximation relation:

    $$\ddot{d} \approx -2 \cdot \frac{d\Gamma_p}{dt}$$

    - a third step of estimating the value of the speed V of the projectile at the considered instant, said estimated speed being defined by the following relation:

    $$\hat{V} = \left( d^2 - \dot{d} \cdot R - \hat{\Gamma}_p \cdot R \right)^{1/2}$$

    - a fourth step of estimating, at the considered instant, the value of the estimate E of the elevation of the projectile, said elevation being estimated, by integration as a function of time, on the basis of the following relation:

    $$\frac{d\tilde{E}}{dt} = \frac{1}{R} \cdot \left( \hat{v}^2 - d^2 \right)^{1/2}$$

2. The method according to claim 1, **characterised in that** it further comprises, between the third and the fourth step, an intermediate step of estimating the value of the angle of attitude presented by the projectile at the considered instant, the angle of attitude being defined by the following relation:

$$\dot{d} = V \cdot \cos \psi$$

the estimate of the angle of attitude $\psi$ presented by the projectile allowing the value of the equivalent surface area that is presented by the projectile to be plotted.

3. The method according to claim 1, **characterised in that** it further comprises an additional step of calculating the precision $\sigma_V^2$ of the estimate of the speed of the projectile and the precision $\sigma_E^2$ of the estimate of the angle of elevation, $\sigma_V^2$ and $\sigma_E^2$ being respectively defined by the following relations:

$$\sigma_V^2 \approx \frac{1}{4 \cdot \hat{V}^2} \cdot \left[ 4 \cdot d^2 \cdot \sigma_d^2 + K \cdot \frac{R^2 \cdot \sigma_{\dot{d}}^2}{\Delta t^2} + \sigma_R^2 \cdot \left( \dot{d}^2 + \hat{\Gamma}_p^2 \right) \right],$$

$$\sigma_E^2 = \frac{\Delta t^2}{2 \cdot R^2 \cdot \left( \hat{V}^2 - d^2 \right)} \cdot \left[ \left( \frac{\hat{V}^2 - d^2}{R} \right)^2 \cdot \sigma_R^2 + \hat{V}^2 \cdot \sigma_V^2 + d^2 \cdot \sigma_d^2 \right]$$

in which the following quantities respectively represent:

- d, the Doppler speed of the projectile;
- $\sigma_d$, the precision on d;
- R, the measured radial distance;
- $\sigma_R$, the precision on R;
- $\Delta t$, the refresh period of the measurements.

**Patentansprüche**

1. Verfahren zum Ermitteln des Elevationswinkels eines Projektils auf einer ballistischen Flugbahn, **dadurch gekennzeichnet, dass** es die folgenden Schritte beinhaltet:

- einen ersten Schritt des Schätzens, zu dem betrachteten Zeitpunkt, der Werte der Größen d und $\ddot{d}$, die jeweils die erste und die zweite Ableitung in Bezug auf die Zeit der Doppler-Geschwindigkeit d des Projektils repräsentieren;
- einen zweiten Schritt des Schätzens der radialen Beschleunigungskomponente $\Gamma_p$ des Projektils, wobei diese radiale Beschleunigung durch die folgende Näherungsbeziehung definiert wird:

$$\ddot{d} \approx -2 \cdot \frac{d\Gamma_p}{dt}$$

- einen dritten Schritt des Schätzens, zu dem betrachteten Zeitpunkt, des Wertes der Geschwindigkeit V des Projektils, wobei die geschätzte Geschwindigkeit durch die folgende Beziehung definiert wird:

$$\hat{V} = \left( d^2 - \dot{d} \cdot R - \hat{\Gamma}_p \cdot R \right)^{1/2}$$

- einen vierten Schritt des Schätzens, zu dem betrachteten Zeitpunkt, des Wertes der Schätzung E der Elevation des Projektils, wobei diese Elevation durch Integration in Abhängigkeit von der Zeit auf der Basis der folgenden Beziehung geschätzt wird:

$$\frac{d\hat{E}}{dt} = \frac{1}{R} \cdot \left( \hat{V}^2 - d^2 \right)^{1/2}$$

**2.** Verfahren nach Anspruch 1, **dadurch gekennzeichnet, dass** es ferner, zwischen dem dritten und dem vierten Schritt, einen Zwischenschritt des Schätzens des Wertes des Lagewinkels beinhaltet, der durch das Projektil zu dem betrachteten Zeitpunkt präsentiert wird, wobei der Lagewinkel durch die folgende Beziehung definiert wird:

$$d = V \cdot \cos \psi$$

wobei die Schätzung des vom Projektil präsentierten Lagewinkels $\psi$ das Aufzeichnen des Wertes der vom Projektil präsentierten äquivalenten Oberfläche zulässt.

**3.** Verfahren nach Anspruch 1, **dadurch gekennzeichnet, dass** es ferner einen zusätzlichen Schritt des Berechnens der Genauigkeit $\sigma_V^2$ der Schätzung der Geschwindigkeit des Projektils und der Genauigkeit $\sigma_E^2$ der Schätzung des Elevationswinkels beinhaltet, wobei $\sigma_V^2$ und $\sigma_E^2$ jeweils durch die folgenden Beziehungen definiert werden:

$$\sigma_V^2 \approx \frac{1}{4 \cdot \hat{V}^2} \cdot \left[ 4 \cdot d^2 \cdot \sigma_d^2 + K \cdot \frac{R^2 \cdot \sigma_d^2}{\Delta t^2} + \sigma_R^2 \cdot \left( \dot{d}^2 + \hat{\Gamma}_\rho^2 \right) \right],$$

$$\sigma_E^2 = \frac{\Delta t^2}{2 \cdot R^2 \cdot \left( \hat{V}^2 - d^2 \right)} \cdot \left[ \left( \frac{\hat{V}^2 - d^2}{R} \right)^2 \cdot \sigma_R^2 + \hat{V}^2 \cdot \sigma_V^2 + \dot{d}^2 \cdot \sigma_d^2 \right]$$

wobei die folgenden Größen jeweils Folgendes repräsentieren:

- d die Doppler-Geschwindigkeit des Projektils;
- $\sigma_d$ die Genauigkeit auf d;
- R die gemessene Radialdistanz;
- $\sigma_R$ die Genauigkeit auf R;
- $\Delta t$ die Messungsauffrischungsperiode.

Fig. 1

Fig. 2

Mesures du
doppler d
du projectile

d

Estimation des grandeurs
$\dot{d}$ et $\ddot{d}$

31

$\dot{d}, \ddot{d}$

Intégration temporelle :
Estimation de $\hat{\Gamma}_\rho(j)$

32

$\dot{d}$

$\dot{d}$    $\hat{\Gamma}_\rho$    d

Estimation $\hat{V}$ de la
vitesse du projectile

33

$\hat{V}$    d

Calculs des précisions
$\sigma_{\hat{V}}$ et $\sigma_{\hat{E}}$
des Estimations

35

Estimation $\hat{E}$ de l'angle
d'élévation du projectile

34

Estimation $\hat{\Psi}$ de l'angle
d'aspect du projectile

36

$\sigma_{\hat{V}}$    $\sigma_{\hat{E}}$

$\hat{E}$

$\hat{\Psi}$

## Fig. 3

Fig. 5

Fig. 4